# EUROPEAN PATENT APPLICATION

(11) **EP 4 831 056 A1**
(43) Date of publication of application: **28.10.2026**
(21) Application number: 26171440.6
(22) Date of filing: 09.04.2026
(51) Int. Cl.: B64C 3/56

(54) **FOLDING WING ARRANGEMENT WITH REMOVEABLE ACTUATOR ASSEMBLY**

(30) Priority: 25.04.2025 GB 202506210
(71) Applicant: Airbus Operations Ltd, Filton, Bristol BS34 7PA (GB)
(72) Inventor: SPITZER, Frank, Bristol, BS34 7PA (GB); HIPKISS, Richard James, Bristol, BS34 7PA (GB)
(74) Representative: Abel & Imray LLP

(57) **Abstract**

An aircraft wing, comprising: a fixed wing 12 an outboard wing section 14; and a hinge assembly 52 connecting the outboard wing section to the fixed wing. The wing is configurable between a flight configuration and a ground configuration. The wing further comprises an actuator assembly configured to rotate the outboard wing section about the hinge axis to move the wing between the flight configuration and the ground configuration. The actuator assembly 66, 84 is releasably fastened to a mounting face 94' on the fixed wing. The mounting face has an unobstructed lower edge 95, such that when the actuator assembly 66, 84 is exposed, the actuator assembly may be unfastened from the mounting face 94' and subsequently removed by a translational movement of the actuator assembly over the lower edge 95 of the mounting face 94'.

## Description

### BACKGROUND OF THE INVENTION

The present invention concerns wing folding arrangements. More particularly, but not exclusively, this invention concerns an aircraft wing comprising a rotatable outboard wing section and an actuator assembly, and methods of installing and removing the actuator assembly.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. In such arrangements the moveable end of the wing may sometimes be referred to as a 'folding wing tip' or 'folding wing tip device'. However, it will be appreciated that such a term may also encompass a range of sizes, and where the hinge is relatively far inboard this may equally be considered an 'outboard wing section', a 'folding wing' or a 'movable wing'. For the purposes of the present disclosure these terms are used interchangeably.

In general terms, folding wing arrangements typically comprise: a mechanical joint about which the outboard wing section moves, an actuation system for effecting the movement, and a latching system for latching the outboard wing section in the flight configuration. Some examples of these features are described below.

There are a number of mechanical joint designs for enabling rotation of a folding wing tip about an axis of rotation. The provision of interleaving lugs to form a hinge for a folding wing tip is known. Examples of such arrangements are shown in, for example, EP3560819 (Airbus Operations Limited) and US2019/0359311 (Airbus Operations GmbH). US 2020/0346740 (Boeing) and EP3360779 (Boeing) disclose a different type of joint. US 2020/0346740 discloses a folding wing pivotably coupled to a fixed wing about a hinge interface. The hinge interface comprises a pair of torque boxes through which the hinge pins pass. Each torque box has a length that is greater than its width.

Some actuation systems for folding wing tips include an actuation unit in the form of a Geared Rotary Actuator (GRA). GRAs can be used to control the rotation of the outboard wing section between the flight and ground configurations. In this context, the GRA typically includes a gearing arrangement which transmits the rotation of an input member to an output member that is fixed to the outboard wing section. GRAs have been found to be especially useful in the context of folding wing tip arrangements. Examples of a folding wing tip actuation system comprising a GRA are disclosed in, for example, WO2019/034432 (Airbus Operations GmbH) and WO2020/229630 (Airbus Operations Limited).

A number of designs of latching system have been proposed for folding wing tips. A latching system is often required in order to latch the outboard wing section to the fixed wing section, thereby holding the wing in the flight configuration. A latching system may, in some instances, also be referred to as a locking system for locking the wing in the flight configuration. A first example of a latching system is shown in EP3560819 referred to above. In EP3560819, the fixed wing and the wing tip device comprise a series of interleaving hinge lugs and latching lugs. A hinge axis passes through the hinge lugs above mid-thickness of the wing. The latching lugs are located below the hinge lugs and along the lower-most part of the junction between the wing and wing tip device. This may be beneficial from the structural perspective (for example it may provide effective load transfer across the joint). The latching system is arranged such that when the wing tip device is in the flight configuration, locking pins are inserted through aligned holes in the latching lugs, thereby locking the wing in this configuration. A second example of a latching system is shown in EP3360779, also referred to above. EP3360779 discloses a latch system comprising a plurality of latch pins, the latch pins being deployable from either side of, and into, shear plates and/or the torque boxes on the folding wing.

It is desirable for the installation and/or maintenance of a folding wing (including, for example the installation and/or maintenance of any of the components described above) to be as straightforward as possible.

Aspects of the present invention seek to address this desire. Alternatively or additionally, the present invention seeks to provide an improved wing folding arrangement.

### SUMMARY OF THE INVENTION

According to a first aspect of the invention, there is provided an aircraft wing, comprising: a fixed wing; an outboard wing section outboard of the fixed wing; and a hinge assembly connecting the outboard wing section to the fixed wing. The aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The wing further comprises an actuator assembly configured to rotate the outboard wing section about the hinge axis to move the wing between the flight configuration and the ground configuration, wherein the actuator assembly is releasably fastened to a mounting face on the fixed wing. The mounting face has an unobstructed lower edge, such that the actuator assembly may be unfastened from the mounting face and subsequently removed by a translational movement of the actuator assembly over the lower edge of the mounting face.

Providing a mounting face having an unobstructed lower edge has been found to be especially advantageous. In particular, the unobstructed lower edge may enable the actuator assembly to be removed from the mounting face via a purely translational movement (for example sliding the actuator assembly off the lower edge of the mounting face). This may facilitate efficient installation and/or removal of the actuation assembly from the wing.

It will be appreciated that the unobstructed nature of the lower edge of the mounting face is a feature of the mounting face itself. Accordingly, whilst the unobstructed edge may enable the actuator assembly to be moved over the lower edge in principle, it may also be that other components of the wing, remote from the mounting face, need be moved in order to actually remove the actuator assembly.

The actuator assembly may be removeable when it is exposed. The actuator may be exposed when the wing is in the ground configuration.

It may be that the wing, and more preferably the outboard wing section, comprises a lower skin. The lower skin may be arranged such that when the wing is in the flight configuration the lower skin extends inboard of the hinge axis and beneath the actuator assembly and the mounting face. The lower skin may be arranged such that when the wing is in the ground configuration, the lower skin is rotated about the hinge axis such that the actuator assembly and the lower edge of the mounting face are exposed. Such an arrangement may allow the actuator assembly to be readily exposed, and accessed, when the wing is in the ground configuration.

In some embodiments, the actuator assembly may comprise an actuator directly connected to the mounting face. In other embodiments, the actuator assembly may comprise an actuator and a mounting bracket. The mounting bracket may be coupled to the output of the actuator. The mounting bracket may be fixed relative to the actuator (for example where the axis of rotation of the actuator is coaxial with the hinge axis). The mounting bracket may be arranged to allow relative motion between actuator and the bracket (for example where the axis of rotation of the actuator is parallel but non-coaxial with the hinge axis).

The actuator assembly may be releasably fastened to the mounting face by a plurality of fasteners. The actuator assembly may be unfastened by removing the fasteners.

The fixed wing may comprise a wall structure, the wall structure having a first side comprising the mounting face. The wall structure may comprise a second side, opposite the first side. The actuator assembly may be fastened to the mounting face by fasteners extending from the first side to the second side of the wall structure.

In embodiments comprising a wall structure, the second side of the wall structure may form an interior wall of a recess in the fixed wing. The recess may be sized to allow access to the fasteners from the second side of the wall. Such an arrangement may be beneficial because it may allow the fasteners to be readily accessed (for example to undo or to tighten them). This may further facilitate efficient installation and/or removal of the actuation assembly from the wing. The access to the fasteners is preferably from below the wing. The access may be enabled when the wing is in the ground configuration.

Embodiments of the invention have been found to be especially beneficial in the context of particular arrangements of a folding wing. For example, the hinge assembly may comprise: a fore set of interleaving lugs and an aft set of interleaving lugs; and a fore hinge pin and an aft hinge pin, extending through the fore and aft sets of interleaving lugs respectively, thereby forming a hinge. The actuator assembly may be located between the fore set of interleaving lugs and the aft set of interleaving lugs. Aspects of the invention have been found to be especially beneficial in the context of an actuator assembly located between the fore and aft sets of lugs because the presence of those interleaving lugs may otherwise restrict the ability to access or manoeuvre the actuation assembly.

Unless otherwise specified, the terms 'fore' and 'aft' are used herein to specify relative locations, along a direction parallel to the hinge axis. Unless otherwise specified, there terms 'inboard' and 'outboard' are used herein to specify relative locations, along a direction perpendicular to the hinge axis. In some embodiments, the hinge axis may be toed in or out. In preferred embodiments, the hinge axis may be orientated substantially in a line-of-flight direction. In such embodiments the terms fore/aft and inboard/outboard are also commensurate with the relative locations, in the line-of-flight direction and the spanwise direction respectively.

The wing may further comprise: a latch assembly, located in the fixed wing and inboard of the actuator assembly; a fore latching arm associated with the outboard wing section; and an aft latching arm associated with the outboard wing section. The latch assembly and the fore and aft latching arms may be configured such that when the wing is in the flight configuration, the fore latching arm is fore of the latch assembly and the aft latching arm is aft of the latch assembly such that the latch assembly is between the latching arms. The latch assembly may comprise an aft latch pin, deployable in the aft direction to latch the aft latching arm, and a fore latch pin, deployable in a forward direction, to latch the fore latching arm, such that when the wing is in the flight configuration and the fore and aft latch pins are deployed, the outboard wing section is latched to the fixed wing. Aspects of the invention have been found to be especially beneficial in the context of such a wing. For example, the latch assembly may be located in a recess in the fixed wing. In embodiments comprising a wall structure, the second side of the wall structure may form an interior wall of this recess that contains the latch assembly. In some embodiments, it may be that the recess containing the latch assembly is exposed when the wing is in the ground configuration. For example, the wing, and more preferably the outboard wing section, may comprise a lower skin arranged such that when the wing is in the flight configuration the lower skin extends inboard of the hinge axis and beneath the actuator assembly, the mounting face and the recess containing the latch assembly. The lower skin may be arranged such that when the wing is in the ground configuration, the lower skin is rotated about the hinge axis such that the actuator assembly, the lower edge of the mounting face and the recess are exposed. Such an arrangement may allow access (via the recess) to the fasteners that attach the actuator assembly to the mounting face. Such an arrangement may also allow access to the actuator, without requiring additional components (such as a manhole cover) to be removed. This may facilitate efficient removal and/or installation of the actuator assembly.

The fixed wing may comprise a plurality of aft latching arms. The fixed wing may comprise a plurality of fore latching arms. In principle each latch pin may be deployable to be received in a latching arm only. More preferably, each latch pin is deployable to be received in both a latching arm (associated with the outboard wing section) and a latch pin receiver (associated with the fixed wing).

The fixed wing may comprise a fore latch pin receiver (and more preferably a plurality of fore latch pin receivers). The fixed wing may comprise an aft latch pin receiver (and more preferably a plurality of aft latch pin receivers). The latch pin receivers may be arranged such that when the wing is in the flight configuration the fore latch pin receiver(s) are adjacent (and more preferably interleave with) the fore latching arm(s), and the aft latch pin receiver(s) are adjacent (and more preferably interleave with) the aft latching arm(s). This may enable the aft latch pin to be deployed through aligned holes in all of the aft latching arm(s) and aft latch receiver(s), and the fore latch pin to be deployed through aligned holes in all of the fore latching arm(s) and aft latch receiver(s). At least one of the aft latch pin receivers may be an extension of the aft set of lugs on the fixed wing. At least one fore latch pin receiver may be an extension of the fore set of lugs on the fixed wing.

The aft latching arm may be an extension of one of the lugs in the aft set of lugs of the outboard wing section. The fore latching arm may be an extension of one of the lugs in the fore set of lugs of the outboard wing section. The latching arms may extend in a direction perpendicular to the hinge axis. The latch pin receivers may extend in a direction perpendicular to the hinge axis.

The actuator assembly comprises an actuator. The actuator may be driven by a remote motive force (for example the actuator may be driven by a remote motor, via a transmission). The actuator may be a rotary actuator. The actuator may be a geared rotary actuator (GRA). The use of a GRA has been found to be especially beneficial in the context of this arrangement as it is especially space-efficient and tends to be a good fit between the sets of interleaving lugs. A GRA has also been found to be readily mountable onto a mounting face (either directly, or via a mounting bracket attached thereto).

The actuator is located between the fore and aft sets of interleaving lugs. Accordingly, the actuator may be located at a first axial position along the hinge axis, with the fore set of interleaving lugs being located fore of the first position and the aft set of interleaving lugs being located aft of the first position. The latch assembly is located inboard of the actuator. The latch assembly is preferably inboard of the actuator but at the same first axial position along the hinge axis. For example, the actuator and the latch assembly may be centred at a common first axial position along the hinge axis.

The actuator may have a length, measured in a direction along the hinge axis. The latch assembly may have a length, measured in a direction along the hinge axis. The magnitude of the length of the actuator and the magnitude of the length of the latch assembly may each be less than the distance (i.e. the spacing in a direction along the hinge axis) between the fore and aft latching arms. The actuator may have a length that is less than the combined length of the latch pins.

According to another aspect of the invention, there is provided an aircraft wing, comprising: a fixed wing; an outboard wing section outboard of the fixed wing; and a hinge assembly connecting the outboard wing section to the fixed wing. The aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly comprises: a fore set of interleaving lugs and an aft set of interleaving lugs; a fore hinge pin and an aft hinge pin, extending through the fore and aft sets of interleaving lugs respectively, thereby forming a hinge having a hinge axis; and an actuator, for example, a Geared Rotary Actuator (GRA), sandwiched between the fore sets of lugs and the aft sets of lugs, the GRA being configured to rotate the outboard wing section about the hinge axis to move the wing between the flight configuration and the ground configuration. The outboard wing section further comprises a plurality of fore latching arms and a plurality of aft latching arms extending inboard from the respective sets of lugs on the outboard wing section. The fixed wing comprises a mounting plate positioned between the fore and aft latching arms, the GRA being releasably coupled to the mounting plate. The mounting plate has an open lower edge, such that the GRA may be decoupled from the mounting plate and subsequently slid off the lower edge of the mounting plate via a translational movement.

In any of the aspects of the invention, it may be that the outboard section of the wing is configured to be extended out to a position in which the wing is in the flight configuration, and is configured to be retracted to a position in which the wing is in the ground configuration and the total length of the wing is reduced. In the flight configuration the trailing edge of the outboard wing section may be a continuation of the trailing edge of the fixed wing. The leading edge of the outboard wing section may be a continuation of the leading edge of the fixed wing, such that there is a smooth transition from the fixed wing to the outboard wing section. It will be appreciated that there may be a smooth transition, even where there are changes in sweep or twist at the fixed wing/ outboard wing section. However, there are preferably no discontinuities at the junction between the fixed wing and outboard wing section.

The outboard wing section may be a wing tip extension, for example a generally planar tip extension. In other embodiments, the outboard wing section may comprise, or consist of, a non-planar device, such as a winglet. The outboard wing section may include, for example, trailing edge moveable devices for control (ailerons) or leading edge devices for stall protection, such as slats or droop nose devices.

When the wing is in the ground configuration (e.g. with the outboard wing section retracted), the aircraft incorporating the wing, may be unsuitable for flight. For example, the outboard wing section may be aerodynamically and/or structurally unsuitable for flight in the ground configuration.

With the push for higher and higher aspect ratio wings, the embodiments of the invention are well suited to use in such wings (i.e. long narrow wings), which typically have confined space in which to mount equipment. The aspect ratio of a wing is defined as the ratio of its span to its mean chord and equal to the square of the span divided by the wing area. The aspect ratio of the wing may be greater than 8, possibly greater than 9, and optionally 10 or higher. In some embodiments it may be that the aspect ratio of the wing is 11 or 12 or more.

The maximum depth of the wing (height between upper and lower wing covers) at the hinge axis may be less than 50cm, and in some embodiments may be less than 35cm. The depth of the wing at the hinge axis may be less than 32.5cm, preferably less than 27.5cm, and optionally less than 22.5cm.

The length of the outboard wing section of the aircraft wing may be more than 3m, preferably more than 4m, and more preferably more than 5m.

The span ratio of the fixed wing relative to the outboard wing section may be such that the fixed wing comprises at least 60%, 70%, 80%, 90%, or more, of the overall span of the wing. The span ratio of the fixed wing relative to the outboard wing section may be such that the outboard wing section comprises at least 10%, 20%, 30%, 40%, or more, of the overall span of the wing.

The hinge axis of the aircraft wing may be more than 12.5m away from the root of the wing, preferably more than 15m away, and optionally more than 17m away.

According to a further aspect of the invention there is also provided an aircraft including the aircraft wing according to any of the other aspects of the invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or 100 tonnes or more. The aircraft may have an operating empty weight of at least 20 tonnes, optionally at least 30 tonnes, and possibly about 40 tonnes or more.

In the flight configuration, the span of the aircraft may exceed an airport compatibility limit. In the ground configuration the span may be reduced such that the span (with the wing in the ground configuration) is less than, or substantially equal to, the airport compatibility limit. The airport compatibility limit is a span limit (for example relating to clearance restrictions for buildings, signs, other aircraft). The compatibility limit is preferably a gate limit.

It may be that the span of the aircraft in the ground configuration is less than a wing span limit and that the span of the aircraft wing in the flight configuration is greater than the wing span limit. The wing span limit may be 36m. The wing span limit may be 52m. The wing span limit may be 65m. The wing span limit may be 80m. It may be that the span of the aircraft wing is at least 8 metres shorter (possibly 10 metres or more shorter) in the ground configuration than in the flight configuration.

It may be that the outboard wing section undergoes a rotation of more than 45 degrees, preferably more than 60 degrees, and optionally more than 75 degrees as it moves from the ground configuration to the flight configuration. A higher amount of rotation may enable a greater difference in wing span as between the ground configuration and the flight configuration.

The mean chord of the wing may be less than 6.5m, less than 5m, and more preferably less than 4.5m. The chord of the wing at the interface between the fixed wing and the outboard wing section may be less than 5m. For example, for an aircraft having a wing span in the ground configuration of between 65m and 80m, the chord of the wing at the interface between the fixed wing and the outboard wing section may be greater than 3m but less than 5m. For an aircraft having a wing span in the ground configuration of 65m or less, the chord of the wing at the interface between the fixed wing and the outboard wing section may be less than 4m, and may optionally be less than 3m.

According to a further aspect of the invention there is also provided a fixed wing for use as the fixed wing in the aircraft wing described herein. The tip of the fixed wing may comprise a mounting face onto which an actuator assembly may be fastened, the mounting face having an unobstructed lower edge, such that when the actuator assembly is unfastened from the mounting face, the actuator assembly may be slid on/off the lower edge of the mounting plate via a translational movement.

According to a further aspect of the invention there is also provided a method of removing an actuator assembly from an aircraft wing, the aircraft wing comprising: a fixed wing; an outboard wing section outboard of the fixed wing; a hinge assembly connecting the outboard wing section to the fixed wing; and an actuator assembly for moving the outboard wing section relative to the fixed wing, wherein the method comprises the steps of: actuating the outboard wing section to a ground configuration, in which ground configuration the outboard wing section is rotated about a hinge axis of the hinge assembly, such that the actuation assembly is exposed beneath the wing; decoupling the actuator assembly from the outboard wing section; decoupling the actuator assembly from a mounting face on the fixed wing; and sliding the actuator assembly off an unobstructed lower edge of the mounting face.

The steps of the method are not necessarily sequential. For example, the steps of decoupling of the actuator assembly from the outboard wing section and decoupling the actuator assembly from a mounting face on the fixed wing, may take place in the order listed, or the other way round.

According to a further aspect of the invention there is also provided a method of installing an actuator assembly onto an aircraft wing, the aircraft wing comprising: a fixed wing; an outboard wing section outboard of the fixed wing; and a hinge assembly connecting the outboard wing section to the fixed wing, wherein the method comprises the steps of: placing the outboard wing section into a ground configuration, in which ground configuration the outboard wing section is rotated about a hinge axis of the hinge assembly, such that a mounting face on the fixed wing is exposed; sliding the actuator assembly over an unobstructed lower edge of the mounting face such that the actuator assembly is positioned against the mounting face; coupling the actuator assembly to the mounting face; and coupling the actuator assembly to the outboard wing section.

The steps of the method are not necessarily sequential. For example, the steps of coupling of the actuator assembly to the outboard wing section and coupling the actuator assembly to the mounting face on the fixed wing, may take place in the order listed, or the other way round.

It will of course be appreciated that features described in relation to one aspect of the present invention may be incorporated into other aspects of the present invention. For example, an aircraft wing according to one aspect of the invention, may incorporate any of the features described with reference to an aircraft wing according to another aspect of the invention and *vice versa.* Furthermore, the methods according to aspects of the invention may incorporate any of the features described with reference to the aircraft wing or aircraft according to other aspects of the invention.

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3a and 3b are isometric views showing the joint between the fixed wing and the outboard wing section of Figure 1;
Figure 4 is a sectional front view of the aircraft wing in Figure 3a;
Figure 5 is an isometric view showing the tip of the fixed wing in the aircraft wing in Figure 3a;
Figure 6 is the view of Figure 4 but in a sectional view and with a mounting bracket of the actuator assembly attached;
Figures 7a to 7c show the same sectional front view of Figure 4 but during stages of removal of the actuator assembly;
Figure 8 is a flowchart characterising the steps in the method of removing the actuator assembly illustrated in Figures 7a-7c; and
Figure 9 is a flowchart showing a method of installing an actuator assembly according to a second embodiment of the invention.

### DETAILED DESCRIPTION

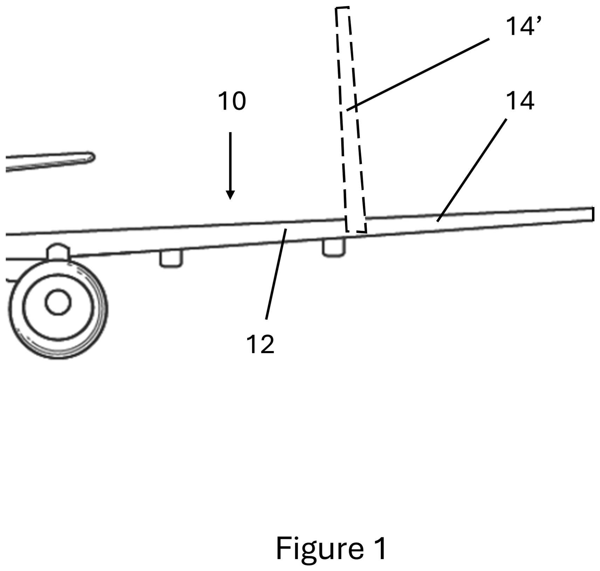

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

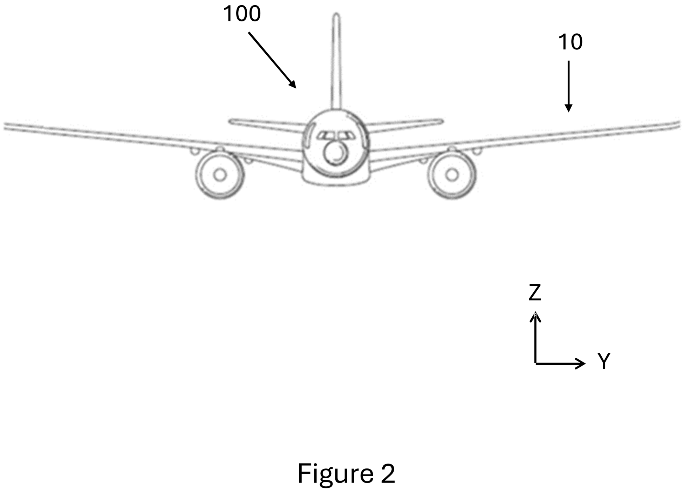

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

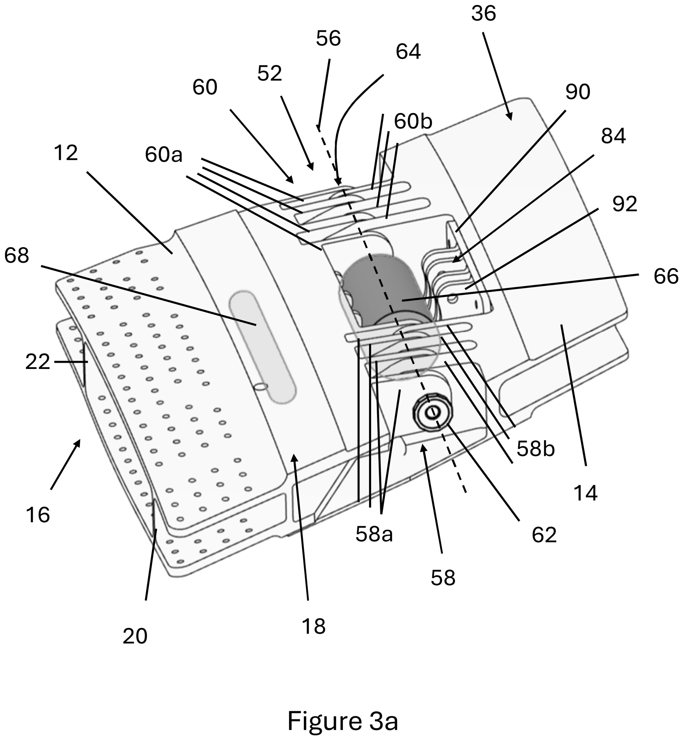

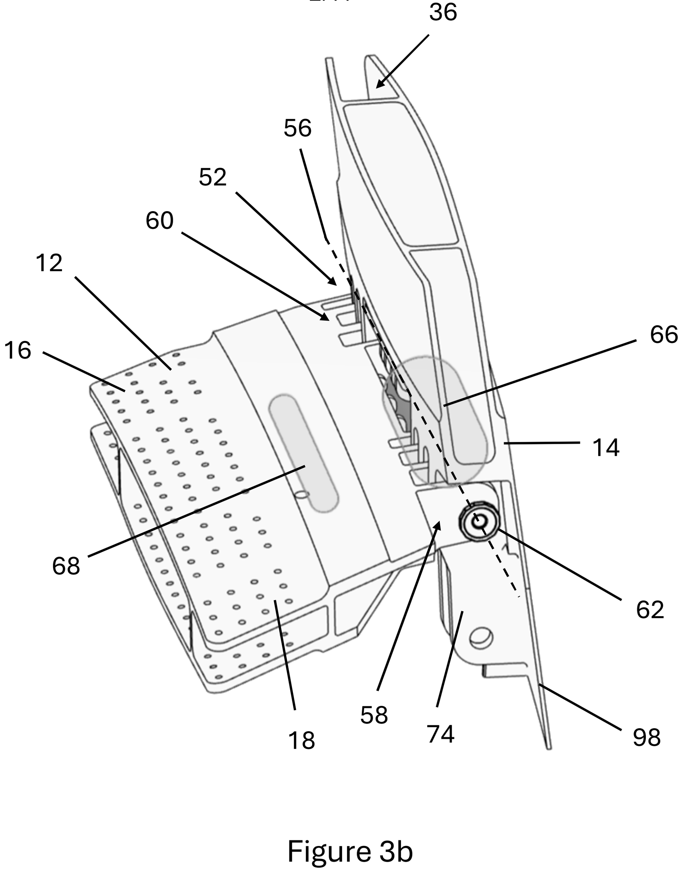

Aircraft having wings with a fixed portion and a foldable outboard section are known *per se.* However, the first embodiment of the invention comprises a novel arrangement at the joint between the fixed wing 12 and the outboard wing section 14 as will now be described in more detail with reference to Figures 3 to 9.

Figures 3a and 3b are isometric views showing the joint between the fixed wing 12 and the outboard wing section 14, when the wing is in the flight configuration (see Figure 3a) and the ground configuration (see Figure 3b). Various components, such as the wing covers, have been omitted for clarity.

Referring first to Figures 3a and 3b, the fixed wing 12 comprises a tip 16. The tip 16 of the fixed wing 12 comprises a front spar 20 and a rear spar 22 (the ends of which are shown in Figure 3a). The outboard wing section 14 comprises a root 36.

The fixed wing 12 and the outboard wing section 14 are connected via a hinge assembly 52. The hinge assembly 52 allows rotation of the outboard wing section 14, about a hinge axis 56, between the position shown in Figure 3a (when the wing is in a flight configuration), and the position shown in Figure 3b, when the wing is in the ground configuration.

In the first embodiment, the hinge axis 56 is substantially parallel to the line of flight (and thus substantially parallel to the X-direction, aligned with the longitudinal axis of the fuselage of the aircraft). In the description below, various aspects of the design are described with reference to their location in the wing. The fore-aft direction is along the X axis. The inboard-outboard direction is in the Y-axis, running perpendicular to the X-direction and extending spanwise, perpendicular to the longitudinal axis of the aircraft.

The hinge assembly 52 comprises both a fore set 58 and aft set 60 of interleaving lugs. Hinge pins 62, 64 extend through aligned holes in these fore 58 and aft 60 sets of interleaving lugs respectively, thereby forming a hinge. The holes are bushed to provide a suitable seating for the hinge pins 62, 64 and thus provide a suitable means for enabling maintenance and repair of the hinge assembly 52.

The root 36 of the outboard wing section 14, comprises a set of three fore lugs 58b interleaving with a corresponding set of four fore lugs 58a on the fixed wing 12 (in some of the Figures only some of the lugs may be labelled for clarity). Similarly, the root of the outboard wing section 14 comprises a set of three aft lugs 60b interleaving with a corresponding set of four aft lugs 60a on the fixed wing 12. The fore lugs 58a, 58b and aft lugs 60a, 60b are integrally formed with the respective parts of the fixed wing and outboard wing sections.

The fore lugs 58a of the fixed wing 12 are connected to the fore lugs 58b of the outboard wing section 14, and the aft lugs 60 of the fixed wing 12 are connected to the aft lugs 60b of the outboard wing section 14, for rotation relative to one another via the fore and aft hinge pins 62, 64 which pass through the holes formed in the lugs 58, 60.

The hinge assembly 52 also comprises a geared rotary actuator (GRA) 66. The GRA 66 is located along the hinge axis 56 and is centrally positioned (along the hinge axis 56) between the fore and aft sets of interleaving lugs 58, 60.

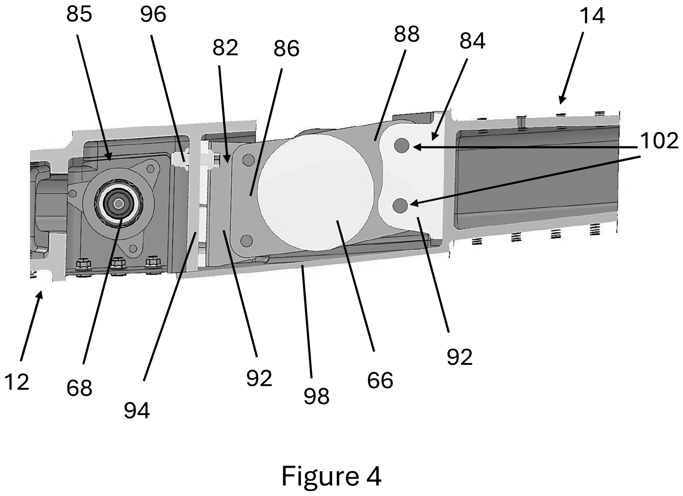

The GRA 66 has a rotary input (not shown) via a GRA transmission (not shown). The rotary input drives a planetary gearbox within the GRA 66. The GRA 66 has a series of stages, alternately connected to either the fixed wing 12 or the outboard wing section 14 (described in more detail below with reference to Figure 4 to 7c). The rotary input drives rotation of the stages coupled to the outboard wing section 14 thereby rotating the outboard wing section 14 about the hinge axis 56 and towards the ground configuration.

The first embodiment of the invention also comprises a latch assembly 68. The latch assembly 68 is arranged to selectively allow or prevent the movement of the wing between the flight and ground configurations, by retracting or extending a pair of latch pins (not shown) into latching arms and latch receivers. In this respect, the outboard wing section 14 comprises a pair of fore latching arms 74 (visible in Figure 3b) and a pair of aft latching arms (not visible in Figure 3b). Each of the latching arms in the fore and aft pairs are integrally formed as an extension of corresponding fore lugs 58b or aft lugs 60b of the outboard wing section 14.

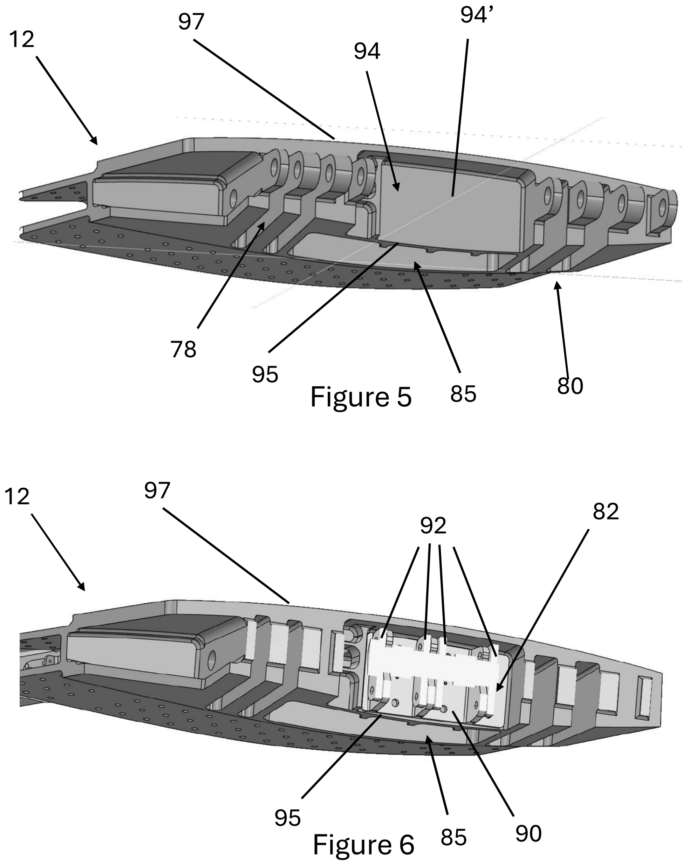

When the wing is in the flight configuration (see Figures 3a), the fore and aft latching arms extend inboard from the hinge axis 56. The latching arms interleave with a corresponding series of fore and aft latch pin receivers 78, 80. As most clearly visible in Figures 5 and 6, the fixed wing 12 comprises three fore latch pin receivers 78 and three aft latch pin receivers 80. Each latch pin receiver is integrally formed as an extension of corresponding fore and aft lugs 58a, 60a of the fixed wing 12.

When the wing is in the flight configuration, each of the latching arms in the pairs of arms 74, 76 are sandwiched between two corresponding latch pin receivers 78, 80. Each of the latching arms 74, 76 and each of the latch pin receivers 78, 80 comprise a hole (one of which is visible in the foremost latch pin receiving in Figures 5 and 6). The holes all align along a common axis. The common axis is known as the latch line and extends parallel to, but inboard of, the hinge axis 56.

The latch assembly 68 is in the form of a cylindrical locking and latching unit (LLU) housed in a recess 85 within the tip of the fixed wing (the recess 85 being most clearly visible in Figure 5 and 6). The LLU 68 comprises a fore latch pin, deployable in the forward direction, and an aft latch pin, deployable in an aft direction. The fore latch pin is moveable between a retracted position and an extended position. In the retracted position the pin is retracted into a pin housing such that the pin is fully withdrawn aft of the fore pair of latching arms 74 and the fore latch pin receivers 78. In the extended position the pin 70 has been deployed in a forward direction such that it extends through the aligned holes of the fore sets of latching arms 74 and latch pin receivers 78. The aft latch pin 72 is also moveable between a retracted position and an extended position. In the retracted position, the pin 72 is fully withdrawn fore of the aft pair of latching arms 76 and the aft latch pin receivers 80.

The retracted position of the latch pins allows for relative movement between the latching arms 74, 76 and the latch receivers 78, 80. This therefore allows movement of the wing between the flight and ground configurations via actuation of the GRA 66. In contrast, when the pins 70, 72 are in the extended position, the pins inhibit the movement between the latching arms 74, 76 and the respective latch pin receivers 78, 80, thereby latching the wing in the flight configuration and transferring loads across the joint and into the fixed wing structure.

The above-mentioned layout of the GRA 66 and LLU 68, within an arrangement having a hinge comprising two sets of interleaving lugs, is especially space-efficient. Aspects of the first embodiment of the invention also enable efficient installation and removal of the GRA 66, as will now be explained with reference to Figures 4 to 7c.

Figure 4 is a sectional front view of the arrangement in Figure 3a. The section is taken in the Y-Z plane at the location between the GRA 66 and the fore set 58 of interleaving lugs.

The GRA 66 has a centre of rotation that is co-axial with the hinge axis 56. The GRA 66 has a series of alternate stages, rotatable about the rotational axis of the GRA 66. The alternate stages are configured for connecting to either the fixed wing 12 or the outboard wing section 14. In that respect, each stage comprises an integral arm 86, 88 extending towards the respective part of the wing. The integral arms are omitted from Figures 3a and 3b for clarity, but a pair of the arms 86, 88 is visible in Figure 4. The inboard arm 86 is fixedly attached to an inboard mounting bracket 82, and the outboard arm 88 is fixedly attached to an outboard mounting bracket 84. The mounting brackets 82, 84 are themselves fastened to the fixed wing 12 and the outboard wing section 14. Accordingly, when the rotary input to the GRA 66 drives rotation of the stages, the outboard wing section 14 is rotated relative to the fixed wing 12.

Both the mounting brackets 82, 84 comprise a foot 90 from which a series of lugs 92 protrude. The outboard mounting bracket 84 is visible in Figure 3a, whereas the inboard mounting bracket 82 is most clearly shown in Figure 6 (which is a sectional view in an X-Y plane, taken part-way between the centre of the GRA 66 and the mounting foot 90). Each arm 86, 88 of the GRA 66 is attached to a respective lug 92 of a mounting bracket 82, 84 via a pair of vertically-spaced pins 102.

Referring to Figure 4, the inboard mounting bracket 82 is fastened to a mounting plate 94 at the tip of the fixed wing 12. A series of six nut-and-bolt fasteners 96 extend through the foot 90 of the mounting bracket 84, and through holes in the mounting plate 94 (only one fastener is shown in Figure 4 for clarity). The fasteners 96 have been tightened to firmly clamp the mounting bracket 84 to the mounting plate 94. A similar arrangement is used to fasten the outboard mounting bracket 84 to the root of the outboard wing section 14.

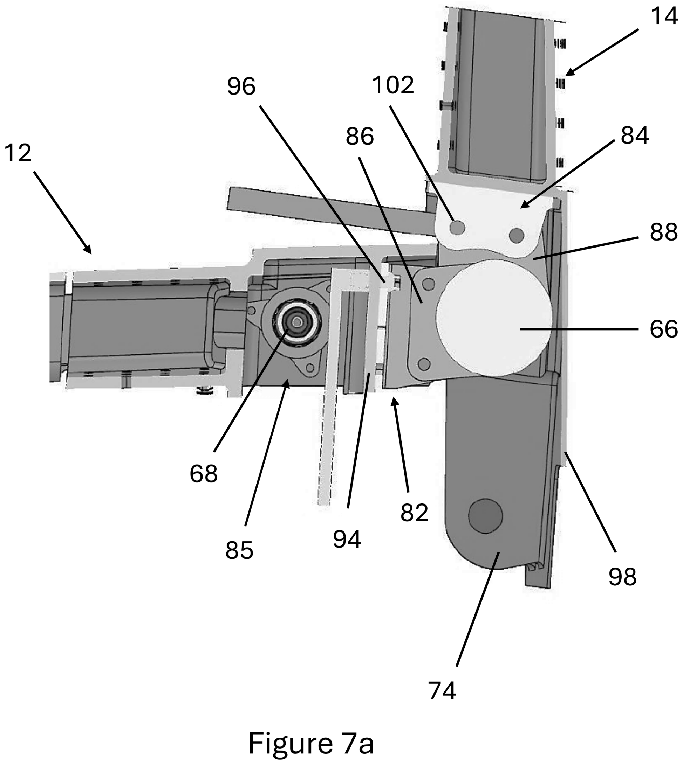

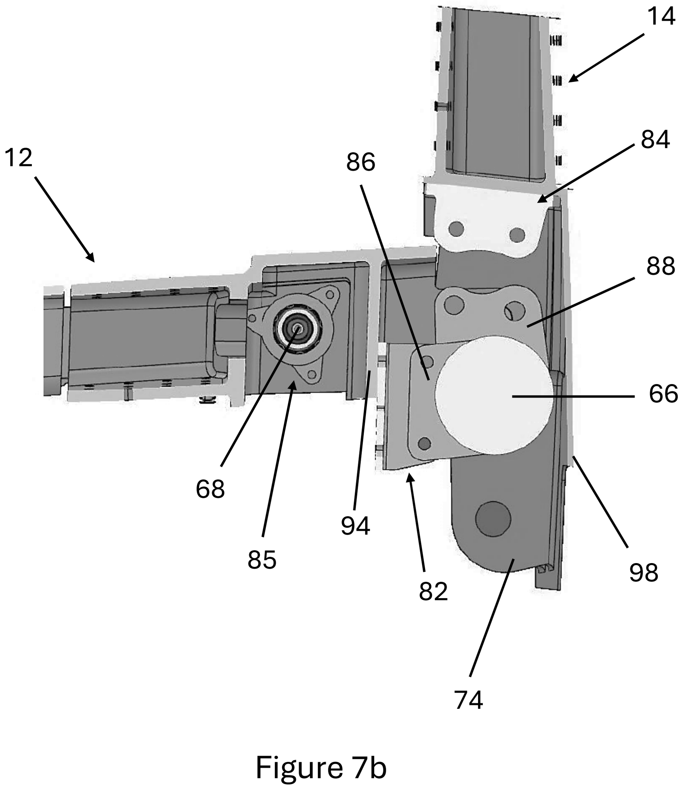

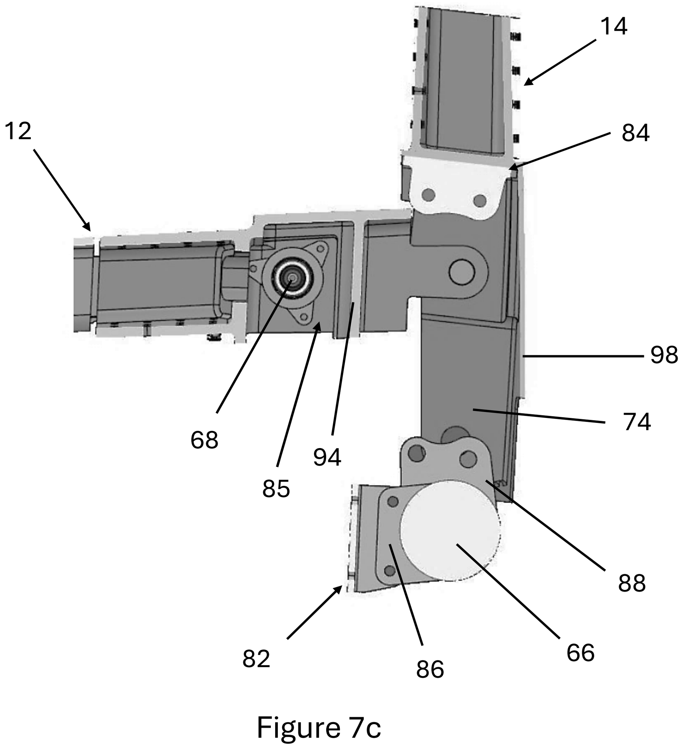

The rear face of the mounting plate 94 forms the inner wall of the recess 85 housing the LLU 68. Such an arrangement is beneficial because it enables the nuts of the fasteners 96 to be easily accessed with a tool (see Figure 7a described below).

As best shown in Figure 5, the mounting plate 94 is positioned, in the X-direction, between the fore and aft latch pin receivers 78, 80 in the fixed wing 12 and is positioned in the Y-direction, between the GRA 66 and the LLU 68. The front face 94' of the mounting plate 94 forms a mounting face for receiving the foot 90 of the mounting bracket 82. The mounting face is planar and is delimited in the fore and aft directions by the structure of the latch pin receivers 78, 80. Along its upper edge, the mounting face is delimited by the upper wing skin 97 at the tip of the fixed wing 12.

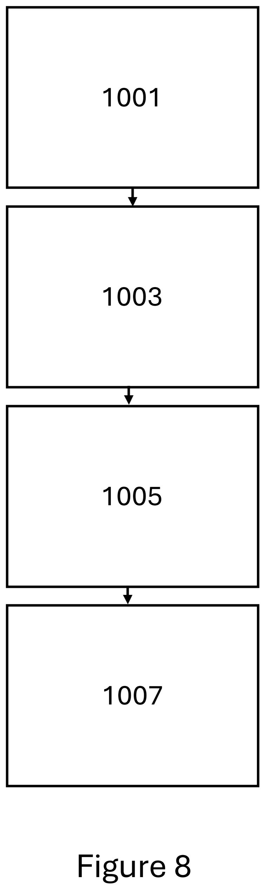

Importantly, the mounting face is unobstructed at its lower edge 95. For example, there is no lip structure surrounding this part of the mounting face, nor are there any other parts of the fixed wing 12 that extend below the mounting face and protrude into the plane defined by the mounting face. This arrangement enables the mounting bracket 82, and hence the GRA 66, to be efficiently installed and removed from the wing, as will now be described with reference to Figures 7a to 7c and to the flow chart of Figure 8.

As an initial step 1001, the wing is moved to the ground configuration. Figure 7a shows the wing in the ground configuration in which the outboard wing section 14 has been rotated upwards by the GRA 66. The latching arms 74 are extensions of the hinge lugs and therefore move with the outboard wing section 14. The latching arms 74 are also attached to an associated part of the lower wing skin 98. As such, when the wing is in the ground configuration, this part of the lower wing skin 98 drops away from the actuation assembly to expose the GRA 66 and mounting bracket 82 on the underside of the wing.

To remove the actuation assembly, the GRA transmission (not shown) is disconnected from the GRA 66. Fasteners 96 are then released and removed from the mounting bracket 82 (step 1003). Access to the fastener nuts is especially efficient in the first embodiment because they can be accessed from the LLU recess 85 (see Figure 7a). The use of a fastener-removal tool is illustrated schematically in Figure 7a.

With the weight of the GRA 66 supported, pins 102 holding the outboard GRA arm 88 to the outboard mounting bracket 84 are then removed (step 1005).

As the lower edge 95 of the mounting face 94' is unobstructed, the GRA 66 and the mounting bracket 82 can be removed via a pure translational movement in which the foot of the mounting bracket is slid over, and beyond, the lower edge 95 of the mounting face (step 1007). It will be appreciated that this movement is a translational movement in a plane parallel to the plane of the mounting face. This movement is sequentially illustrated in Figures 7a to 7c.

Removal of the GRA 66, may be required for, for example, maintenance or replacement. The arrangement in the first embodiment of the invention facilitates efficient removal of the GRA 66, thereby saving time and cost.

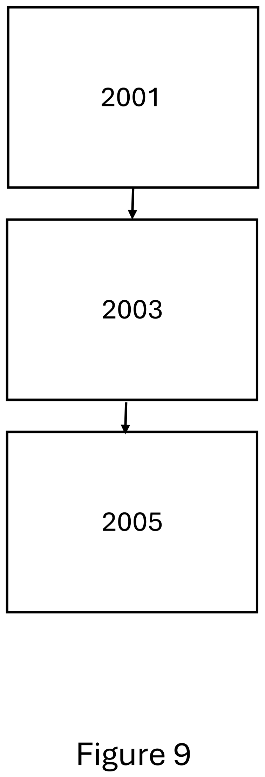

To install (or re-install) the reverse of the above-mentioned steps may be performed. Such method of installing the actuator assembly is shown in Figure 9. The method comprises: translating the mounting bracket 82 over the lower edge of the mounting face 94', such that the foot 90 of the mounting bracket 82 is located against the mounting face 94' (step 2001); inserting and securing the fasteners 96 to hold the mounting bracket 82 to the mounting face 94' of the fixed wing 12 (step 2003); coupling the GRA arm 88 to the outboard mounting bracket 84 (step 2005). The arrangement in the first embodiment of the invention therefore facilitates efficient installation of the GRA 66, thereby saving time and cost.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein,
the wing further comprises an actuator assembly configured to rotate the outboard wing section about the hinge axis to move the wing between the flight configuration and the ground configuration,
wherein
the actuator assembly is releasably fastened to a mounting face on the fixed wing,
and wherein
the mounting face has an unobstructed lower edge, such that the actuator assembly may be unfastened from the mounting face and subsequently removed by a translational movement of the actuator assembly over the lower edge of the mounting face.

2. An aircraft wing according to claim 1, wherein the outboard wing section comprises a lower skin, the lower skin being arranged such that when the wing is in the flight configuration the lower skin extends inboard of the hinge axis and beneath the actuator assembly and the mounting face, but when the wing is in the ground configuration, the lower skin is rotated about the hinge axis such that the actuator assembly and the lower edge of the mounting face are exposed.

3. An aircraft wing according to claim 1 or claim 2, wherein the actuator assembly comprises an actuator and a mounting bracket, the mounting bracket being releasably fastened to the mounting face by a plurality of fasteners,
wherein when the fasteners are removed, the actuator assembly may be removed by a translational movement of the mounting bracket, over the lower edge of the mounting plate.

4. An aircraft wing according to any preceding claim, wherein the fixed wing comprises a wall structure, the wall structure having a first side comprising the mounting face, and a second side, opposite the first side,
and wherein the actuator assembly is fastened to the mounting face by fasteners extending from the first side to the second side of the wall structure.

5. An aircraft wing according to claim 4, wherein the second side of the wall structure forms an interior wall of a recess in the fixed wing.

6. An aircraft wing according to any preceding claim, wherein the hinge assembly comprises:
a fore set of interleaving lugs and an aft set of interleaving lugs; and
a fore hinge pin and an aft hinge pin, extending through the fore and aft sets of interleaving lugs respectively, thereby forming a hinge;
and wherein the actuator assembly is located between the fore set of interleaving lugs and the aft set of interleaving lugs.

7. An aircraft wing according to claim 6, wherein the wing further comprises:
a latch assembly, located in the fixed wing and inboard of the actuator assembly;
a fore latching arm associated with the outboard wing section; and
an aft latching arm associated with the outboard wing section,
wherein the latch assembly and the fore and aft latching arms are configured such that when the wing is in the flight configuration, the fore latching arm extends fore of the latch assembly and the aft latching arm extends aft of the latch assembly such that the latch assembly is between the latching arms,
and wherein
the latch assembly comprises an aft latch pin, deployable in the aft direction to latch the aft latching arm, and a fore latch pin, deployable in a forward direction, to latch the fore latching arm,
such that when the wing is in the flight configuration and the fore and aft latch pins are deployed, the outboard wing section is latched to the fixed wing.

8. An aircraft wing according to claim 7 when dependent on claim 5, wherein the latch assembly is located in the recess in the fixed wing.

9. An aircraft wing according to any preceding claim, wherein the actuator assembly comprises a Geared Rotary Actuator (GRA).

10. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein, the hinge assembly comprises:
a fore set of interleaving lugs and an aft set of interleaving lugs;
a fore hinge pin and an aft hinge pin, extending through the fore and aft sets of interleaving lugs respectively, thereby forming a hinge having a hinge axis; and
a Geared Rotary Actuator (GRA) sandwiched between the fore sets of lugs and the aft sets of lugs, the GRA being configured to rotate the outboard wing section about the hinge axis to move the wing between the flight configuration and the ground configuration;
wherein the outboard wing section further comprises a plurality of fore latching arms and a plurality of aft latching arms extending inboard from the respective sets of lugs on the outboard wing section;
and wherein the fixed wing comprises a mounting plate positioned between the fore and aft latching arms, the GRA being releasably coupled to the mounting plate,
and wherein the mounting plate has an open lower edge, such that the GRA may be decoupled from the mounting plate and subsequently slid off the lower edge of the mounting plate via a translational movement.

11. An aircraft comprising the aircraft wing according to any preceding claim.

12. A fixed wing for use as the fixed wing in the aircraft wing according to any of claim 1 to 9, wherein the tip of the fixed wing comprises a mounting face onto which an actuator assembly may be fastened, the mounting face having an unobstructed lower edge, such that when the actuator assembly is unfastened from the mounting face, the actuator assembly may be slid on/off the lower edge of the mounting plate via a translational movement.

13. A method of removing an actuator assembly from an aircraft wing, the aircraft wing comprising: a fixed wing; an outboard wing section outboard of the fixed wing; a hinge assembly connecting the outboard wing section to the fixed wing; and an actuator assembly for moving the outboard wing section relative to the fixed wing,
wherein the method comprises the steps of:
o actuating the outboard wing section to a ground configuration, in which ground configuration the outboard wing section is rotated about a hinge axis of the hinge assembly, such that the actuation assembly is exposed beneath the wing;
o decoupling the actuator assembly from the outboard wing section;
o decoupling the actuator assembly from a mounting face on the fixed wing; and
o sliding the actuator assembly off an unobstructed lower edge of the mounting face.

14. A method of installing an actuator assembly onto an aircraft wing, the aircraft wing comprising: a fixed wing; an outboard wing section outboard of the fixed wing; and a hinge assembly connecting the outboard wing section to the fixed wing,
wherein the method comprises the steps of:
o placing the outboard wing section into a ground configuration, in which ground configuration the outboard wing section is rotated about a hinge axis of the hinge assembly, such that a mounting face on the fixed wing is exposed;
o sliding the actuator assembly over an unobstructed lower edge of the mounting face such that the actuator assembly is positioned against the mounting face;
o coupling the actuator assembly to the mounting face; and
o coupling the actuator assembly to the outboard wing section.

15. The method of claim 11 or claim 12, wherein the aircraft wing is the wing according to any of claims 1 to 10.
